Europäisches Patentamt

European Patent Office

Office européen des brevets

(11) Veröffentlichungsnummer: **0 234 432**
**A2**

(12) **EUROPÄISCHE PATENTANMELDUNG**

(21) Anmeldenummer: **87101994.9**

(22) Anmeldetag: **12.02.87**

(51) Int. Cl.⁴: **D01F 11/10**

(30) Priorität: **20.02.86 DE 3605378**

(43) Veröffentlichungstag der Anmeldung:
**02.09.87 Patentblatt 87/36**

(84) Benannte Vertragsstaaten:
**DE FR GB NL**

(71) Anmelder: **BASF Aktiengesellschaft**
**Carl-Bosch-Strasse 38**
**D-6700 Ludwigshafen(DE)**

(72) Erfinder: **Naarmann, Herbert, Dr.**
**Haardtblick 15**
**D-6719 Wattenheim(DE)**

(54) **Verfahren zum Beschichten von Kohlenstoff-Fasern.**

(57) Verfahren zum Aufbringen von elektrisch leitfähigen Schichten auf Kohlenstoff-Fasern oder -Fäden oder flächigen Gebilden daraus, bei dem man auf der Oberfläche der Kohlenstoff-Gebilde Monomere aus der Klasse der Aniline oder der Pyrrolei oder Thiophene in Gegenwart eines Elektrolyten polymerisiert.

EP 0 234 432 A2

## Verfahren zur Beschichtung von Kohlenstoff-Fasern

Die Erfindung betrifft ein Verfahren zum Aufbringen von elektrisch leitfähigen Schichten auf Kohlenstoff-Fasern oder -Fäden oder flächigen Gebilden durch anodische Oxidation von Monomeren aus der Klasse der aromatischen primären Amine in Gegenwart von Leitsalzen unter Abscheiden der elektrisch leitfähigen Schicht auf den Kohlenstoff-Fasern, -Fäden oder flächigen Gebilden.

Es ist bekannt, daß Polyanilin, das durch Oxidation von Anilin in Gegenwart von Leitsalzen hergestellt worden ist, elektrische Leitfähigkeiten besitzt, so daß es in Form von Filmen oder Folien als elektrische Leiter verwendet werden kann (M. Jozefowicz und R. Buvet, Chim. Macromol. 1, (1970), S. 469 ff). Das U.K.Patent 1 216 549 beschreibt die Verwendung bestimmter Formen des elektrisch dotierten Polyanilins als Anode oder Katode in elektrochemischen Speichern oder Batterien.

Aus der Patentanmeldung P 33 27 019 (EP-A-84 108 455) ist ein Verfahren zur elektrochemischen Polymerisation von Pyrrol bekannt, bei dem man Pyrrol in Gegenwart von Leitsalzen in Elektrolytlösungsmitteln durch anodisch Oxidation auf einer flächenförmig ausgebildeten Anode polymerisiert, wobei flächige Gebilde mit großer Oberfläche, wie Gewebe, Gewirke, Geflechte oder Netze verwendet werden, so daß sich das Polypyrrol auf den flächigen Gebilden niederlegt und man Verbundstoffe mit guter elektrischer Leitfähigkeit erhält.

Aufgabe der Erfindung ist es, ein neues Verfahren zum Aufbringen von elektrisch leitfähigen Schichten auf Kohlenstoff-Fasern, -Fäden oder flächigen Gebilden daraus zu schaffen, das besonders wirtschaftlich arbeitet und zu elektrisch leitfähigen Verbundstoffen führt, die z.B. als elektrische Leiter oder als Elektroden in Batterien Verwendung finden können.

Die Aufgabe der Erfindung wird durch ein Verfahren zum Aufbringen von elektrisch leitfähigen Schichten auf Kohlenstoff-Fasern, -Fäden oder flächigen Gebilden daraus gelöst, bei dem man auf der Oberfläche von Kohlenstoff-Fasern, -Fäden oder flächigen Gebilden daraus Monomere aus der Klasse der heterocyclischen und/oder aromatischen primären oder sekundären Amine oder aus der Klasse der Pyrrole oder Thiophene in Gegenwart eines Elektrolyten polymerisiert.

Vorteil der Erfindung ist es, daß man elektrisch leitfähige Verbundstoffe erhält, die sich durch Leitfähigkeitswerte von 0.1 bis 500 S/cm auszeichnen. Es hat sich gezeigt, daß die auf den Kohlenstoff-Fasern oder flächigen Gebilden niedergeschlagenen Polyaniline besonders fest haften, so daß die erhaltenen elektrisch leitfähigen Gebilde besonderen mechanischen Beanspruchungen ausgesetzt werden können, ohne an Leitfähigkeit einzubüßen.

Die für das Verfahren zu verwendenden Kohlenstoff-Fasern oder -Fäden werden beispielsweise durch pyrolytische Verfahren aus Polyacrylnitril oder durch Tempern von Fäden oder Geweben aus Polyestern bei Temperaturen oberhalb von 600°C erhalten. Es können aber auch nach dem Verfahren flächige Gebilde aus Kohlenstoff-Fasern oder -Fäden mit einer elektrisch leitfähigen Polymerenschicht überzogen werden. Solche flächigen Gebilde sind z.B. Gewebe, Gewirke, Geflechte, Netze oder faservliesartige Stoffe. Derartige flächige Gebilde erhält man z.B. nach bekannten Verfahren aus Polyphenylenoxid. Diese Gebilde sind ebenfalls durch Pyrolysemethoden zu erhalten, wenn direkt flächige Gewebe beim Pyrolyseprozeß eingesetzt werden. Die Herstellung solcher Fasern, Fäden oder flächigen Gebilden daraus ist Stand der Technik. Die Kohlenstoff-Fasern, -Fäden oder flächigen Gebilde werden in einer Lösung, die Monomere und Leitsalze enthält, mit dem aus dem Monomeren entstehenden Polymeren, das das Anion des Leitsalzes eingelagert enthält, überzogen.

Als Monomere enthält die Elektrolytlösung eine Verbindung aus der Klasse der heterocyclischen und/oder aromatischen primären und/oder sekundären Amine. Besonders geeignet ist Anilin. Es können aber auch Polyphenylendiamine oder die primären Amine von kondensierten Ringsystemen wie Aminoanthrazen, Anisidin oder substituiertes Anilin oder Phenylendiamin sein. In Mengen bis zu etwa 25 % können den Monomeren auch andere anodisch oxidierbaren Verbindungen aus der Klasse der Pyrrole oder Thiophene zugesetzt werden. Es ist aber auch möglich, die anodische Oxidation der Aniline in Gegenwart anderer Zusatzstoffe, wie Indigo oder Polyindigo, Polyindophenin durchzuführen.

Andere Monomere, die polymerisiert werden können, sind z.B. Verbindungen aus der Klasse der fünfgliedrigen heterocyclischen Verbindugen mit einem konjugierten $\pi$-Elektronensystem die Stickstoff, Schwefel oder Sauerstoff als Heteroatom enthalten. Beispiele dieser Verbindungen sind solche aus der Klasse der Pyrrole, der Thiophene und der Furane. Von den Pyrrolen eignen sich z.B. das unsubstituierte Pyrrol selbst aber auch N-substituierte Pyrrole wie N-Alkylpyrrol. Es können aber auch andere substituierte Pyrrole wie 3,4-Dialkylpyrrole oder 3,4-Dichlorpyrrole Verwendung finden. Von den Verbindungen der Klasse der Thiophene eignet sich insbesondere das unsubstituierte Thiophene selbst sowie 2-oder 3-Alkylthiophene, z.B. 3-Methylthiophen oder 2,3-Diethylthiophen. Von den Verbindungen der Klasse der Furane kommt ebenfalls das unsubstituierte Furan in Frage, aber auch Alkylfurane wie 2-Ethyl-oder 2,3-Dimethylfuran. Diese genannten fünfgliedrigen heterocyclischen Verbindungen können aber auch zusammen mit anderen copolymerisierbaren Verbindungen, wie z.B. Thiazol. Oxazol oder Imidazol, polymerisiert werden.

Der Elektrolyt enthält als Lösungsmittel z.B. organische Lösungsmittel, wie Methanol, Ethanol, Polyole, Aceton oder Tetrahydrofuran. Geeignet sind aber auch Pyridin, Acetonitril, Methylenchlorid, Eisessig, Propylencarbonat oder Dimethylsulfoxid. Es kann aber auch in Wasser oder Mischungen von Wasser mit einem der oben genannten mischbaren Lösungsmittel gearbeitet werden.

In den Elektrolyten ist außerdem ein Leitsalz enthalten. Die Leitsalzkonzentration beträgt bei dem erfindungsgemäßen Verfahren im allgemeinen 0.001 bis 1 Mol. vorzugsweise 0.01 bis 0,5 Mol Leitsalz pro Liter Elektrolytlösungsmittel. Als Anionen für das Leitsalz haben sich das Tetrafluoroborat-, Tetrafluoroarsenat-, Hexafluoroarsenat-, Hexafluoroantimonat-, Hexachloroantimonat-, Hexafluorophosphat-, Perchlorat-, Hydrogensulfat-und Sulfat-Anion als besonders vorteilhaft erwiesen. Besonders günstig sind auch Leitsalze, die Anionen aromatischer Sulfonsäuren, beispielsweise das Benzolsulfonsäure-Anion, das Toluolsulfonsäure-Anion oder auch anionische, polymere aromatische Sulfonsäureverbindungen, wie das Polystyrylsulfonsäure-Anion, enthalten. Als Kationen für die Leitsalze kommen Erdalkalimetall-Kationen oder Alkalimetall-Kationen in Frage. Günstig sind auch Onium-Kationen des Stickstoffs und Phosphors. Davon seien neben den Ammoniumionen insbesondere Tetramethylammonium-, Tetraethylammonium-oder Triphenylphosphonium-Kationen genannt.

Besonders vorteilhaft sind Elektrolyte, die eine Lewis-Säure enthalten. Erläuterungen über Lewis-Säuren finden sich in Römpps Chemie-Lexikon, 8. Auflage, Seite 2360 (Franckh'sche Verlagshandlung Stuttgart). Von diesen Lewis-Säuren kommen z.B. Schwefelsäure, Perchlorsäure, Bortetrafluorsäure, Zinkchlorid oder Addukte der Flußsäure mit Ammoniak in Frage.

Besonders vorteilhaft arbeitet man, wenn der Elektrolyt noch ein Oxidationsmittel in Mengen von 0,01 bis 5 Mol pro 1 Mol Elektrolytlösungsmittel enthält. Geeignete Oxidationsmittel sind z.B. Kaliumchromat, Kaliumpersulfat oder Eisenperchlorat, Wasserstoffperoxid oder Derivate des Wasserstoffperoxides oder organische Perverbindungen wie Ketonperoxide od. ä. Die Leitsalzkonzentration wird bei dem erfindungsgemäßen Verfahren so gewählt, daß im allgemeinen Mengen zwischen 10 und 40 Mol%, bezogen auf 1 Mol des zu polymerisierenden Monomeren eingesetzt werden.

Die Leitsalze können allein oder auch in Mischung miteinander Verwendung finden.

Das erfindungsgemäße Verfahren kann in den üblichen und an sich bekannten elektrolytischen Zellen oder Elektrolyse-Apparaturen durchgeführt werden. Gut geeignet sind beispielsweise einfache Elektrolyse-Apparaturen, bestehend aus einer Zelle ohne Diaphragma, einer Elektrode aus Kohlenstoff-Fasern, -Fäden oder flächigen Gebilden, einer Elektrode aus z.B. Edelmetall und einer externen Stromquelle. Vorzugsweise ist die Anode flächig ausgebildet. Außer den erwähnten einfachen elektrolytischen Zellen ohne Diaphragma können auch andere Elektrolyseeinrichtungen für das erfindungsgemäße Verfahren Einsatz finden, beispielsweise Zellen mit Diaphragmen oder solche mit Referenzelektroden zur exakten Potentialbestimmung. Häufig ist eine Messung der Strommenge (A sec) zweckmäßig.

Normalerweise wird das erfindungsgemäße Verfahren bei Raumtemperatur durchgeführt. Da sich die Reaktionstemperatur bei dem erfindungsgemäßen Verfahren jedoch als unkritisch erwiesen hat, kann sie allerdings in einem breiten Bereich variiert werden, so lange die Erstarrungstemperatur bzw. Siedetemperatur . des Elektrolyt-Lösungsmittels ·nicht unter-bzw. überschritten wird. Im allgemeinen hat sich eine Polymerisationstemperatur im Bereich von 0 bis 50°C, insbesondere von +10 bis +30°C als sehr vorteilhaft erwiesen.

Als Stromquelle für den Betrieb der elektrolytischen Zelle, in der das erfindungsgemäße Verfahren durchgeführt wird, eignet sich jede Gleichstromquelle, wie z.B. eine Batterie, die eine hinreichend hohe elektrische Spannung liefert. Üblicherweise wird die erfindungsgemäße elektrochemische Polymerisation mit einer Spannung im Bereich von 0,1 bis 100 Volt, vorzugsweise im Bereich von 1,5 bis 25 Volt, betrieben. Für die Stromdichte haben sich Werte im Bereich von 0,05 bis 20 mA/cm², vorzugsweise im Bereich von 1 bis 10 mA/cm², als günstig und vorteilhaft erwiesen.

Die Dauer der Elektrolyse hängt u.a. von dem verwendeten Monomeren, dem Elektrolyt-Sytem und den jeweiligen Elektrolysebedingungen ab, sie wird insbesondere aber auch maßgeblich von der Art des gewünschten Endproduktes mitbestimmt und kann daher in weiten Grenzen schwanken. In dem erfindungsgemäßen Verfahren setzt die Bildung der Polymere auf dem flächigen Anodenelement ein, wobei im Laufe der Elektrolyse sich die Polymerbildung über die gesamte Anodenfläche ausdehnt.

An der Anode resultiert ein Produkt, welches in dem als Anode eingesetzten Flächenelement mit Gewebe-, Netz-oder Vlies-oder auch Fäden oder Faser-Struktur die Polymeren eingelagert enthält. Das Verfahren kann dabei so gesteuert werden, daß noch keine geschlossene, einheitliche Oberfläche der Polymeren gebildet ist. Bei einem solchen Produkt werden die mechanischen und größtenteils auch die chemischen Eigenschaften weitgehend von dem Kohlenstoff-Trägermaterial des elektrisch nicht leitenden Flächenelementes bestimmt, welches nunmehr eine hohe elektrische Leitfähigkeit besitzt. Nach dieser Verfahrensvariante lassen sich somit die elektrischen Eigenschaften der als Anodenmaterial eingesetzten elektrisch nicht leitenden Flächenelemente variieren.

Wird schließlich die Elektrolyse noch weiter geführt, so bildet sich auf der Kohlenstoff-Anode eine durchgehende, geschlossene Filmoberfläche aus dem elektrisch leitenden Polyanilin, wobei die Dicke dieser Filmschicht von der Länge der Elektrolysedauer abhängt. In diesem Fall erhält man Filme aus dem Polymeren, die sozusagen als Stütz-und Trägermaterial das als Anode eingesetzte Kohlenstoffelement eingelagert enthalten.

Die Monomeren können auch durch Oxidationsmittel polymerisiert werden. Als Oxidationsmittel verwendet man zweckmäßig Sauerstoff enthaltende Oxidationsmittel die, bezogen auf 1 Mol der zu polymerisierenden Verbindung, in Mengen von 0,2 bis 10 Molen Verwendung finden können. Größere Mengen an Oxidationsmittel ist nicht erforderlich, da die Menge ausreicht, den gesamten Ausgangsstoff in Polymere umzuwandeln. Die Polymerisation der Monomeren mittels Sauerstoff enthaltender Oxidationsmittel erfolgt zweckmäßig in Lösung, wobei sich Wasser als Lösungsmittel gegebenenfalls in Abmischung mit organischen, mit Wasser mischbaren Lösungsmitteln bewährt hat. Es können aber auch organische Lösungsmittel, wie Dimethylsulfoxid, Methanol, Acetonitril, Ethylencarbonat, Propylencarbonat, Dioxan oder Tetrahydrofuran verwendet werden. Man arbeitet zweckmäßig so, daß die Lösungen 0,1 bis 50 %, vorzugsweise 1 bis 5 Gew. %, des zu polymerisierenden Monomeren enthalten. Die Menge des zuzusetzenden Oxidationsmittels wird nach dem oben angegebenen Prinzip ermessen. Die Oxidation kann zweckmäßig bei Temperaturen zwischen -20 und 40°C erfolgen. Die Polymerisation dieser Monomeren erfolgt in Gegenwart von Leitsalzen, die auch als Komplexierungsmittel oder Dotierunngsmittel bezeichnet werden. Als Leitsalze haben sich z.B. $KHSO_4$, $Na_2SO_4$, $HCOOH$, $LiClO_4$, $HClO_4$, $NEt_4ClO_4$, $NBu_4ClO_4$, $KAlF_3$, $NaAlF_6$, $KBF_4$, $K_2ZrF_6$, $K_2NiF_4$, $HBF_4$, $HO_2(NO_3)_2$, $H_2SO_4$, $FeCl_3$, $NOPF_6$, $KAsF_6$ oder $NaPF_6$ bewährt. Die Konzentration der Leitsalze ist so bemessen, daß auf 3 Mol des eingesetzten Monomeren oder der Gemische der Monomeren mindestens 1 Mol der oben aufgeführten Leitsalze verwendet werden.

Zum Aufbringen der Schicht des Polymeren auf die Oberfläche der Kohlenstoff-Faser-, -Fäden oder flächigen Gebilden geht man zweckmäßig so vor, daß man zunächst eine Lösung des Monomeren und des Leitsalzes auf die Oberfläche aufbringt und danach den Werkstoff mit einer Lösung des Sauerstoff enthaltenden Oxidationsmittels behandelt.

Die nach dem erfindungsgemäßen Verfahren erhaltenen Produkte werden nach Beendigung der Polymerisation zur Entfernung von anhaftendem Leitsalz mit Lösungsmitteln, vorzugsweise Wasser oder wäßrigen Lösungsmitteln, gewaschen und bei Temperaturen im Bereich von 25 bis 150°C, vorzugsweise unter Vakuum getrocknet.

Wirtschaftlich besonders vorteilhaft ist eine kontinuierliche Arbeitsweise, bei der man die Kohlenstoff-Fäden, -Fasern oder flächigen Gebilde daraus kontinuierlich durch ein Elektrolysebad führt, das die Leitsalze und Lösungsmittel enthält. Es werden dabei die als Anode geschalteten Kohlenstoffelemente durch die Lösung, die das Monomere und ein Leitsalz enthält, geführt.

Die als Anode geschalteten Kohlenstoffelemente, an denen sich das Polyanilin niederschlägt, haben eine gute Leitfähigkeit. Wie bereits erwähnt, sind die erfindungsgemäß erhaltenen Verfahrensprodukte elektrische Leiter, die sich zur Herstellung von elektrischen Schaltern, Halbleiterbauteilen, Elektroden für elektrochemische Speicherelemente oder Batterien und als Abschirmmaterial eignen.

Die Erfindung wird durch die nachfolgenden Beispiele näher erläutert. Die in den Beispielen genannten Teile und Prozente beziehen sich, sofern nicht anders angegeben, auf das Gewicht.

Beispiel 1

In einer Elektrolysezelle ist eine Mischung aus 100 cm³ Acetonitril und 2,4 cm³ 70%iger Perchlorsäure als Elektrolyt enthalten. Die Lösung enthält außerdem 10 cm³ Anilin. Eine Folie, die aus Kohlenstoff-Fasern besteht und 200 Fibrillen einer Dicke von 1 $\mu$ pro cm² enthält, wird als Anode geschaltet. Die Kathode besteht aus einem Platinblech, das in 1 cm Abstand von der Anode angeordnet ist. Es wird bei einer Stromdichte von 2 mA/cm$^{-2}$ gearbeitet. Nach einer Dauer von 15 min hat sich durch anodische Oxidation eine Polyanilinschicht von etwa 8 $\mu$ Dicke auf den Kohlenstoff-Faserfibrillen ausgebildet. Insgesamt haben sich 10 Gew.-% des Anilins als Polyanilin auf der Kohlenstoff-Faserfolie niedergeschlagen.

Die Leitfähigkeit der Folie beträgt $10^{+1}$ S/cm. Die unbeschichtete Kohlenstoff-Faserfolie hat eine Leitfähigkeit von $0,1 \times 10^{+1}$ S/cm.

### Beispiel 2

Es wird wie in Beispiel 1 gearbeitet, jedoch ein Elektrolyt verwendet, der Acetronitril als Lösungsmittel und 10 cm³ konzentrierte Schwefelsäure sowie 1 g Kaliumdichromat enthält. Nach einem Zeitraum von 15 min erhält man einen Überzug von 12 $\mu$ Dichte auf der Kohlenstoff-Faserfolie.

Die Leitfähigkeit des beschichteten Materials beträgt $0,8 \times 10^{+1}$ S/cm.

### Beispiel 3

Es wird wie in Beispiel 1 gearbeitet, jedoch der Mischung zusätzlich 10 cm³ Pyrrol zugesetzt. Man erhält einen Überzug, der Dicke 18 $\mu$. Das beschichtete Gebilde hat eine Leitfähigkeit von 65 S/cm.

### Beispiel 4

In einem Ultraschallgerät werden 100 cm³ Wasser, 10 cm³ Pyrrol, 10 cm³ Anilin und 3 cm³ Dodecylsulfat bei 25°C homogenisiert. Die Mischung wird in ein Elektrolysegefäß eingebracht, in dem eine Anode angeordnet ist, die aus einem Kohlenstoff-Faservlies besteht. Die Ausgangsleitfähigkeit des Vlieses is 0,5 S/cm. Als Kathode dient Nickelblech, das im 2 cm Abstand von der Anode angeordnet ist. Anode und Kathode haben eine Dimension von $10 \times 10$ cm. Die Stromdichte bei der anodischen Oxidation beträgt 5 mA/cm². Es wird für die Dauer von 60 Minuten anodisch oxidiert. Man erhält ein beschichtetes Gewebe, das mit einem Polymerbelag von 21 $\mu$ Dicke überzogen ist. Die Leitfähigkeit des beschichteten Gebildes beträgt 83 S/cm.

### Beispiel 5

Eine Mischung aus 20 g Kohlenstoff-Fasern, 20 g Pyrrol und 500 g Ethanol wird mit einer Lösung aus 15,6 g Benzolsulfonsäure, 560 g Ethanol, 71,4 g $Na_2S_2O_8$ in 150 g Wasser versetzt. Auf der Oberfläche der Kohlenstoff-Fasern schlägt sich ein Überzug von Polypyrrol nieder. Nach dem Waschen und Trocknen erhält man Fasern mit einer Leitfähigkeit von 25 S/cm.

### Ansprüche

1. Verfahren zum Aufbringen von elektrisch leitfähigen Schichten auf Kohlenstoff-Fasern, -Fäden oder flächigen Gebilden daraus, dadurch gekennzeichnet, daß man auf der Oberfläche von Kohlenstoff-Fasern, -Fäden oder flächigen Gebilde Monomere aus der Klasse der aromatischen oder heterocyclischen primären oder sekundären Amine oder aus der Klasse der Pyrrole oder Thiophene in Gegenwart eines Elektrolyten polymerisiert.

2. Verfahren nach Anspruch 1, dadurch gekennzeichnet, daß der Elektrolyt eine Lewis-Säure enthält.

3. Verfahren nach Anspruch 1, dadurch gekennzeichnet , daß man die Monomeren mit einem Oxidationsmittel behandelt.

4. Verfahren nach den Anspruch 1, dadurch gekennzeichnet, daß man die Monomeren anodisch oxidiert.